# EUROPÄISCHE PATENTANMELDUNG

(11) **EP 1 300 369 A2**
(43) Veröffentlichungstag der Anmeldung: **09.04.2003**
(21) Anmeldenummer: 02022560.3
(22) Anmeldetag: 08.10.2002
(51) Int. Cl.: C03B 19/14

(54) **Anordnung zum Herstellen von Quarzglaskörpern mit Brechzahlhomogenität**

(30) Priorität: 08.10.2001 DE 10149655
(71) Anmelder: Schott Glas, 55122 Mainz (DE); CARL-ZEISS-STIFTUNG trading as SCHOTT GLAS, 55122 Mainz (DE)
(72) Erfinder: Schmidt, Matthias, 07749 Jena (DE); Ortmann, Lars, 07749 Jena (DE); von der Gönna, Gordon, 07749 Jena (DE); Martin, Rolf, 07743 Jena (DE)
(74) Vertreter: Däsch, Götz, Dipl.-Ing., Patentanwalt

(57) **Zusammenfassung**

Zur Verbesserung der Brechzahlhomogenität in Quarzglaskörpern ist in einer Aufschmelzvorrichtung mindestens ein Brenner gegenüber einem zu erzeugenden Quarzglaskörper bewegbar angeordnet. Der Brenner weist für die Rohstoffdosierung, die H₂-Zuführung und die O₂-Zuführung drei im Wesentlichen konzentrisch zueinander angeordnete Düsengruppen auf. Entsprechend den vorermittelten Verteilungsverläufen von OH und H₂ zwischen der Mitte und dem Rand des Quarzglaskörpers die H₂ und/oder O₂-Volumenströme des Brennergases in Abhängigkeit von der Brennerposition zur Variation des Mischungsverhältnisses verändert werden.

## Beschreibung

Die Erfmdung bezieht sich auf eine Anordnung zur Verbesserung der Brechzahlhomogenität von Quarzglaskörpern gemäß der Gattung der Patentansprüche.

Zur Produktion von Quarzglasprodukten mit einer hoch homogenen Brechzahlverteilung über dem Walzendurchmesser ist es bekanntlich notwendig, ausgeglichene Verteilungen bestimmter Materialeigenschaften über dem Walzendurchmesser zu gewährleisten. Dazu gehören die Verteilung des physikalisch gelösten Wasserstoffes H₂ sowie die des chemisch gelösten Wassers, in Form von OH-Gruppen, im Quarzglas. Die Ausbildung dieser Eigenschaften im Quarzglas wird unter anderem bestimmt durch die chemischen Vorgänge in der Brennerflamme während der Abscheidung sowie durch diffusionsbestimmte Wechselwirkungen der heißen Schmelzkappe mit der umgebenden Gasatmosphäre.
Stand der Technik ist gemäß der WO 01/27044 A1 die Realisierung eines gleichmäßigen Auftrages und einer gleichmäßigen Temperaturverteilung über der Kappe mittels Brennerrocking, bei dem eine Relativbewegung des Brenners zur Kappenoberfläche einer Quarzglaswalze nach bestimmten Weg-Zeit-Gesetzen bei konstanten Brennergasvolumenströmen stattfindet. Es hat sich jedoch herausgestellt, dass infolge der thermischen und strömungstechnischen Differenzen über der Kappenoberfläche hierbei noch Restinhomogenitäten im Quarzglas auftreten können, die zum Rande eines Glaskörpers gesetzmäßig, vorzugsweise parabolisch zunehmen.

Aufgabe der vorliegenden Erfindung ist deshalb eine gezielte Veränderung der chemischen Vorgänge in der Brennerflamme und ggf. deren Kombination mit dem sogen. Brennerrocking über der Kappe des Quarzglaskörpers.

Gemäß der Erfindung wird diese Aufgabe durch die kennzeichnenden Merkmale des ersten Patentanspruchs gelöst. Bezeichnet man die gesteuerte Bewegung des Brenners gegenüber der Kappe des aufzuschmelzenden Quarzglaskörpers als "Brennerrocking", so kann man die ortsabhängige Veränderung des Mischungsverhältnisses der Brennergase, die vorzugsweise H₂ und O₂ sind, als "Gaserocking" ansehen. Für die Variation der Brennergasströme eignen sich besonders außenmischende Brenner mit konzentrischen Ringspalten. Diese weisen eine zentral angeordnete Trägergasdüse für die Rohstoffdosierung mit einem entsprechenden Zuführungsrohr sowie vorzugsweise fünf bis neun konzentrisch angeordnete Ringspaltüsen mit entsprechenden Zuführungen auf, welche von innen nach außen abwechselnd mit O₂ und H₂ beschickt werden. Sämtliche Düsen sind vorzugsweise konzentrisch zur Trägergasdüse angeordnet. Durch Veränderung des Brennergasstroms treten signifikante Unterschiede in den Gehalten von OH-Gruppen und von H₂-Molekülen im Quarzglaskörper auf, die für eine hoch homogene Brechzahlverteilung sorgen. Durch die Veränderung der Mischungsverhältnisse H₂ : O₂ der einzelnen Brennerdüsen wird also die Verteilung der OH-Gruppen und H₂-Moleküle unterschiedlich stark beeinflusst.
Vorteilhafterweise wird zur Veränderung des Mischungsverhältnisses von H₂ : O₂ entweder nur der H₂-Strom oder nur der O₂-Strom entsprechend beeinflusst. Dadurch ist eine Vereinfachung der Steuerungstechnik möglich. Zur Erreichung eines hohen OH-Niveaus und eines niedrigen H₂-Niveaus soll das Mischungsverhältnis, das durch die Veränderung von H₂ entsteht, <2,3 sein. Umgekehrt ergibt sich ein niedriges OH-Niveau und ein hohes H₂-Niveau, wenn das innere Mischungsverhältnis >2,8 ist.
Durch die kontinuierliche, an die Brennerposition angepasste Änderung der Wasserstoff- und/oder Sauerstoffvolumenströme und somit der Mischungsverhältnisse in der Brennerflamme, lassen sich die OH- und die H₂-Niveaus bei der Partikelbildung so einstellen, dass die OH- und die H₂-Verläufe von der Walzenmitte zum Walzenrand weitestgehend vergleichmäßigt werden. Hierbei werden die Änderungen in der OH-Verteilung auf Werte kleiner 5 ppm und die Änderungen in der Wasserstoffverteilung werden auf Werte kleiner 5E17 Moleküle/cm³ verringert. Dies führt letztlich zu einer ausgeglichenen Brechzahlverteilung im Quarzglaskörper (dn-PV<+/-0,5ppm), der dann den hohen optischen Ansprüchen für einen Einsatz als Blank in der Mikrolithographie sowie für weitere spezielle UV-Laseranwendungen genügt.

Die Erfindung wird nachstehend an Hand der schematischen Zeichnung näher erläutert. Es zeigen:
Fig. 1 eine Brenneraustrittsfläche in Draufsicht,
Fig. 2 ein Diagramm zum OH-Gehalt in Abhängigkeit vom Mischungsverhältnis,
Fig. 3 ein Diagramm zum H₂-Gehalt in Abhängigkeit vom Mischungsverhältnis,
Fig. 4 ein Diagramm zur OH- und H₂-Verteilung über den Radius eines Quarzglaskörpers ohne Anwendung der Erfindung,
Fig. 5 ein Diagramm zur Brechzahlverteilung entsprechend Fig. 4,
Fig. 6 ein Diagramm zur Abhängigkeit des Mischungsverhältnisses vom Radius,
Fig. 7 ein Diagramm zur OH- und H₂-Verteilung über den Radius eines Quarzglaskörpers unter Anwendung der Erfindung und
Fig. 8 ein Diagramm zur Brechzahlverteilung entsprechend Fig. 7.

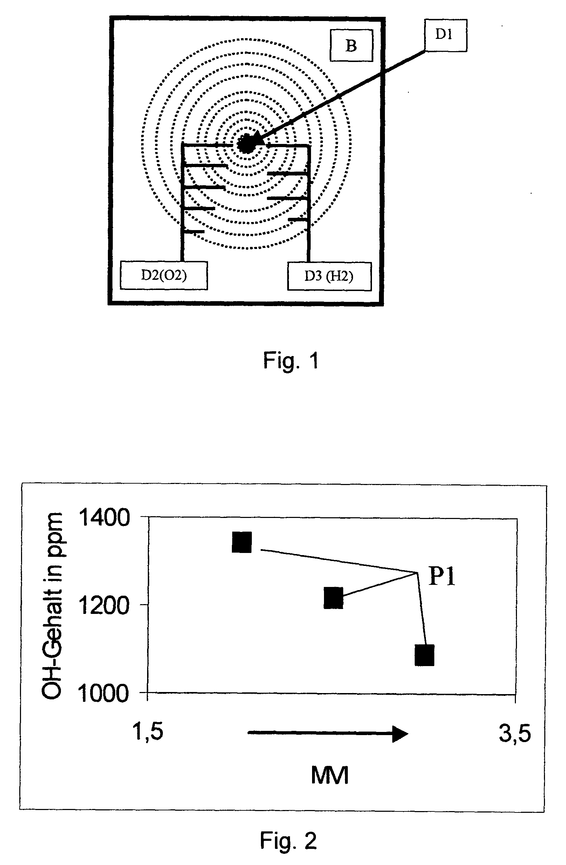

In Fig. 1 ist die Austrittsfläche eines Brenners B dargestellt, in der eine Düse D1 für ein Trägergas von zwei bis vier Düsen für H₂ (D3) und drei bis fünf Düsen für O₂ (D2) konzentrisch umgeben ist. Allgemein ist zu sagen, dass der Brenner B aus strömungstechnischen Gründen mindestens fünf bis neun Ringdüsen aufweisen soll. Eine grundsätzliche Anordnung des Brenners in einer Aufschmelzvorrichtung ist bspw. der bereits genannten WO 01/27044 A1 entnehmbar.
Der Anwendung der Erfindung gehen Abscheideuntersuchungen für das einzustellende Schmelzsystem voraus. Insbesondere geht es um die Ermittlung der Abscheidecharakteristik des Brenners und um die Anpassung der Brennerleistung (Gesamtwasserstoffinenge) auf die zu erreichenden Größenverhältnisse.

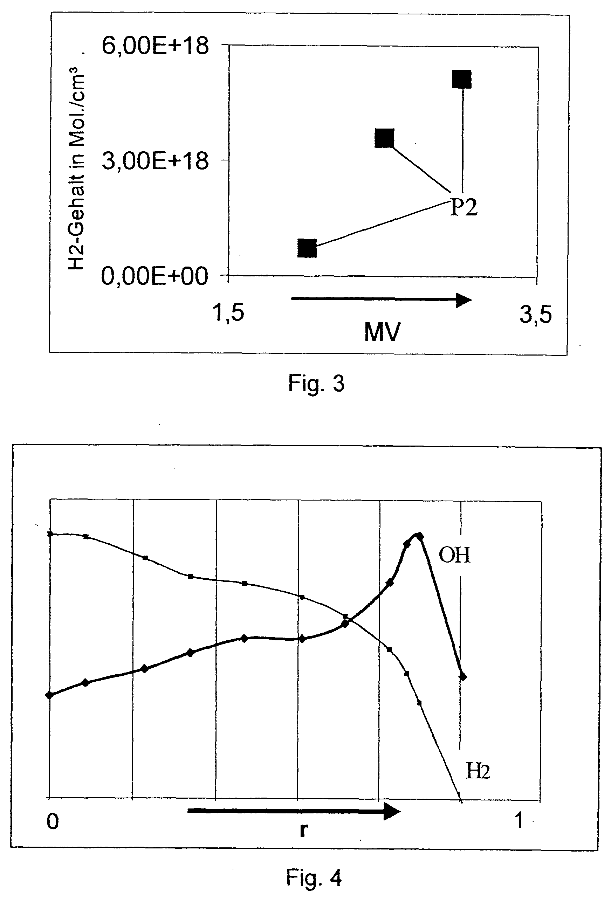

In Fig. 2 ist über Mischungsverhältnis der OH-Gehalt in ppm und in Fig. 3 ist über dem Mischungsverhältnis der H₂-Gehalt in Mol./cm³ aufgetragen. Diese wurden in Abscheideuntersuchungen ermittelt. Da entsprechende Punktreihen P1 und P2 in den Diagrammen gegenläufig fallend bzw. steigend verlaufen, ist zu folgern, dass bestimmte Gaswerteinstellungen im Brenner zu charakteristischen Eigenschaftsniveaus im Quarzglas führen. Ist bspw. das innere Mischungsverhältnis MVI < 2,3, so ergeben sich ein hohes OH-Niveau und ein niedriges H₂-Niveau; ist das innere Mischungsverhältnis MVI > 2,8, so stellen sich ein niedriges OH-Niveau und ein hohes H₂-Niveau ein. Der technisch nutzbare Variationsbereich des über die Gasvolumenströme einstellbaren Mischungsverhältnisses liegt zwischen 1,6 l/l und 3,5 l/l.

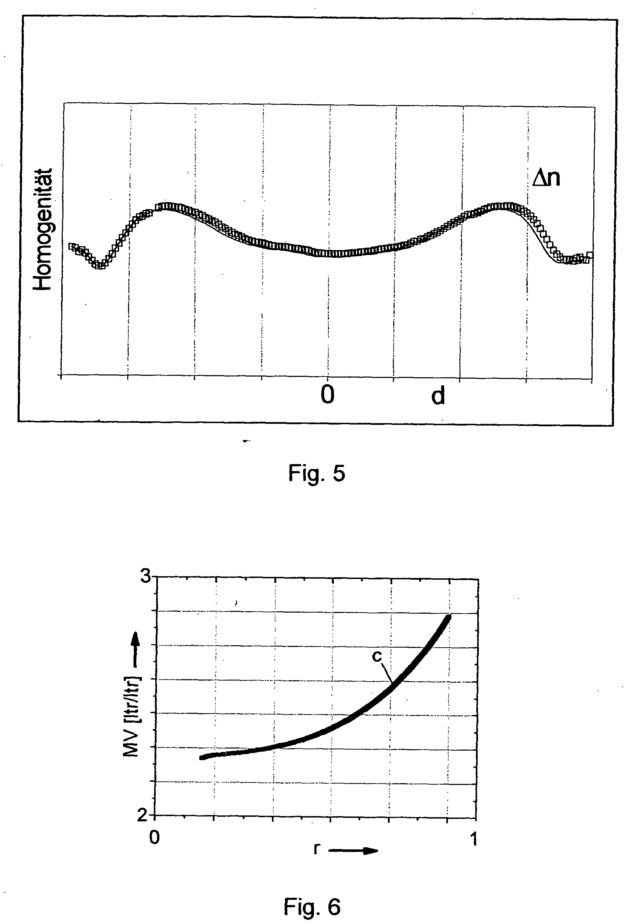

In Fig. 4 sind über einem normierten Radius r die Verteilungen von OH und H₂ in einem Quarzglaskörper dargestellt, der ohne die Inanspruchnahme der Erfindung hergestellt worden ist. Die entsprechende Brechzahlverteilung Δn ergibt sich aus Fig. 5, in der die Homogenität über dem Durchmesser d eines walzenförmigen Quarzglaskörpers aufgetragen ist. Deutlich entsprechen den OH- und H₂-Verteilungen erhebliche Brechzahlschwankungen, die einen nach dem Stand der Technik hergestellten Quarzglaskörper vor allen Dingen in seinen Randbereichen nicht ohne weitere Bearbeitungen für hochgenaue Zwecke verwendbar sein lassen.

In Fig. 6 ist das Mischungsverhältnis MV über dem normierten Radius als Kurve c aufgetragen. Aus den Abscheidungsuntersuchungen ergibt sich für die angestrebten ausgeglichenen Eigenschaftsverteilungen von OH und H₂ auf der Kappe des nicht dargestellten Quarzglaskörpers eine ortsabhängige Funktion für die Gasvolumenstöme bzw. Mischungsverhältnisse der Brennerdüsen (D2 und D3 in Fig. 1).

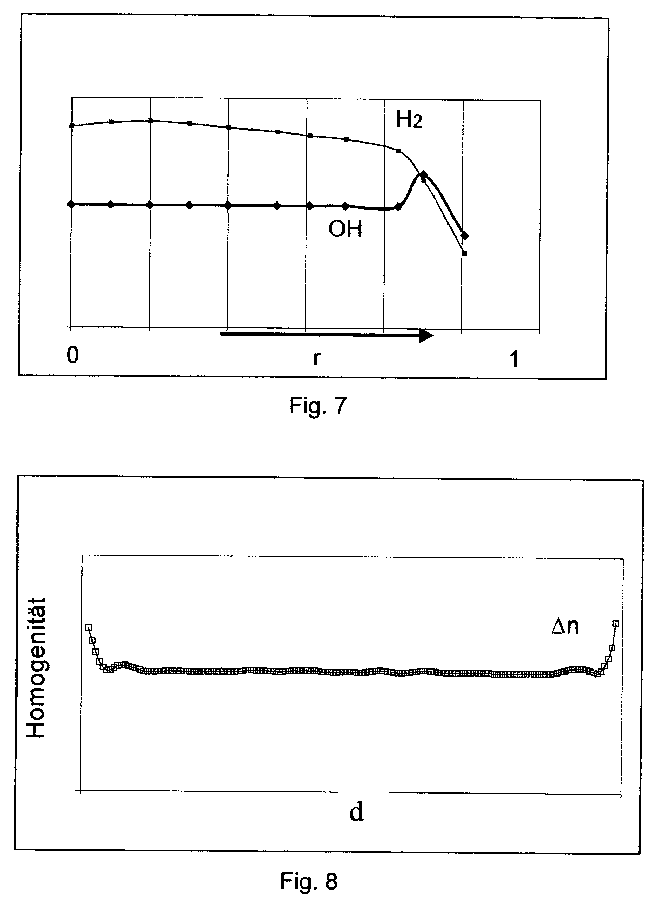

Aus den Figuren 7 und 8 sind die OH- und H₂-Verteilung sowie die entsprechende Brechzahlverteilung Δn im über den Radius bzw. Durchmesser im entsprechenden Quarzglaskörper nach Anwendung der Erfindung (des Gasrocking) aufgetragen. Durch die ortsabhängige Veränderung des Mischungsverhältnisses von H₂ : O₂ in der Brennerflamme von 1,8 l/l auf 2,4 l/l wird am Rand des Quarzglaskörpers gegenüber Fig. 4 das OH-Niveau abgesenkt und das H₂-Niveau angehoben. Aus der ortsabhängigen Veränderung der Gasvolumenstöme und damit des Mischungsverhältnisses von H₂ : O₂ resultiert der geglättete Brechzahlverlauf Δn gemäß Fig. 8.

## Patentansprüche

1. Anordnung zur Verbesserung der Brechzahlhomogenität von Quarzglaskörpern, bei der in einer Aufschmelzvorrichtung mindestens ein Brenner gegenüber einem zu erzeugenden Quarzglaskörper bewegbar angeordnet ist und der Brenner für die Rohstoffdosierung, die H₂-Zuführung und die O₂-Zuführung drei im wesentlichen konzentrisch zueinander angeordnete Düsengruppen aufweist, **dadurch gekennzeichnet, dass** entsprechend den Verteilungsverläufen von OH und H₂ zwischen der Mitte und dem Rand des Quarzglaskörpers die H₂- und/oder O₂-Volumenströme des Brennergases in Abhängigkeit von der Brennerposition gegenüber dem Quarzglaskörper zur Variation des Mischungsverhältnisses im Brennnergas verändert werden.

2. Anordnung gemäß Anspruch 1, **dadurch gekennzeichnet, dass** zur Veränderung des Mischungsverhältnisses nur der H₂-Volumenstrom geändert wird.

3. Anordnung gemäß Anspruch 1, **dadurch gekennzeichnet, dass** zur Veränderung des Mischungsverhältnisses nur der O₂-Volumenstrom geändert wird.

4. Anordnung gemäß mindestens einem der vorstehenden Ansprüche, **dadurch gekennzeichnet, dass** das Mischungsverhältnis zwischen 1,6 l/l und 3,5 l/l liegt.
